Europäisches Patentamt

**European Patent Office**

Office européen des brevets

(11) Numéro de publication: **0 017 600**
**B1**

# (12) FASCICULE DE BREVET EUROPEEN

(45) Date de publication du fascicule du brevet:
**22.08.84**

(51) Int. Cl.³: **G 01 G 3/14**, G 01 G 19/44

(21) Numéro de dépôt: 80420033.5

(22) Date de dépôt: **14.03.80**

(54) **Balance, notamment pèse-personne.**

(30) Priorité: **15.03.79 FR 7907084**

(43) Date de publication de la demande:
**15.10.80 Bulletin 80/21**

(45) Mention de la délivrance du brevet:
**22.08.84 Bulletin 84/34**

(84) Etats contractants désignés:
**AT BE CH DE GB IT LU NL SE**

(56) Documents cités:
**FR - A - 2 356 913**
**FR - A - 2 386 024**
**GB - A - 1 373 992**
**US - A - 3 917 981**
**US - A - 4 094 368**
**US - A - 4 125 168**

(73) Titulaire: **PESE-BEBE CORMIER Société anonyme,
63-65, rue de Romainville, F-93260 Les Lilas (FR)**

(72) Inventeur: **Perrier, Gérard, Chemin de Notre-Dame des
Neiges, F-73100 Mouxy Aix-Les-Bains (FR)**

(74) Mandataire: **Coutel, Jean-Claude, Cabinet AYMARD &
COUTEL 20, rue Vignon, F-75009 Paris (FR)**

ACTORUM AG

**Description**

L'invention concerne une balance, notamment mais non exclusivement un pèse-personne, utilisant un système de pesée par jauges de contrainte.

On connaît des instruments de pesée comprenant une base, un plateau monté de façon élastique sur cette base et se déplaçant vers le bas lorsqu'un corps à peser y est posé, un moyen pour convertir le mouvement vers le bas du plateau en un signal électrique, et un tube d'affichage pour lire ce signal.

Un moyen pour convertir le mouvement du plateau en un signal électrique consiste à équiper les lames flexibles supportant ledit plateau de jauges de contrainte pour en mesurer les déformations élastiques, les transmettre à des composants électroniques qui les traduisent et les affichent en clair.

Ce dispositif nécessite un équipement électrique complexe et onéreux.

Le document US-A-4 125 168 décrit un dispositif de pesée du type à jauges de contrainte qui comporte une embase, un plateau de pesée et, entre ceux-ci, deux éléments sensibles identiques qui coopèrent chacun avec eux en au moins deux points espacés. Chaque élément sensible est symétrique et constitué par une plaque perpendiculaire au plan du plateau de pesée et convenablement échancrée et ajourée pour présenter des zones amincies qui transmettent l'effort et qui reçoivent les jauges de contrainte. Du fait de l'usinage très élaboré des éléments sensibles, ce dispositif est onéreux. De plus, du fait que le plateau de pesée repose sur les éléments sensibles en quatre points, le résultat de la pesée dépend de la position géométrique de la charge sur le plateau.

Le document FR-A-2 386 024 décrit également un dispositif de pesée du type à jauges de contrainte comportant une embase, un plateau de pesée et, entre ceux-ci, un élément sensible unique constitué par une plaque perpendiculaire au plan du plateau de pesée et convenablement échancrée et ajourée pour présenter des zones amincies de transmission d'effort et recevant les jauges de contrainte. Le montage de l'élément sensible sur l'embase et sur le plateau est du type en porte-à-faux, ou en S, c'est-à-dire que l'élément sensible est monté sur l'embase et sur le plateau par ses extrémités inférieure et supérieure opposées. Ce dispositif, du fait de sa structure, présente les mêmes inconvénients que le précédent quant à son prix de revient et à sa précision.

Le document FR-A-2 356 913 décrit un dispositif de pesée, pour le dosage notamment de peintures, comportant une embase, un plateau de pesée et, entre ceux-ci, des lames de pesée montées en porte-à-faux par leurs extrémités opposées sur l'embase et sur le plateau de pesée et équipées de jauges de contrainte. Des blocs en caoutchouc sont interposés entre le plateau de pesée et les extrémités associées des lames. Les lames flexibles ont des directions concourantes vers le centre du plateau et sont montées sur le plateau de pesée par leur extrémité voisine dudit centre. Les blocs en caoutchouc permettent notamment de compenser la déformation des lames hors de leur plan vertical de flexion.

La présente invention a pour but de réaliser une balance du genre susmentionné, simple et de faible coût appliquant le principe des jauges de contrainte mais dont la mesure est indépendante du point d'application de la charge sur le plateau.

A cet effet, la balance selon l'invention comprenant deux éléments sensibles parallèles, formant capteurs de force supportant chacun deux jauges de contrainte et intercalés entre une embase dont ils sont solidaires et un plateau supérieur destiné à recevoir les corps à peser, un moyen pour convertir le mouvement vers le bas du plateau en un signal électrique, un moyen électronique pour traduire ce signal et un moyen d'affichage pour lire ce signal, est caractérisée par le fait que les éléments sensibles comportent chacun un barreau horizontal solidaire de l'embase par une de ses extrémités et portant le plateau mobile par son autre extrémité, par l'intermédiaire d'un joint élastique, les barreaux formant chacun la branche centrale d'un S et les branches centrales des deux S étant orientées dans le même sens.

Dans ce qui suit l'invention est exposée plus en détail à l'aide de dessins représentant seulement un mode d'exécution.

– la fig. 1 est une vue de côté d'un des capteurs en S;
– la fig. 2 est une vue schématique en perspective de la balance;
– la fig. 3 est un schéma du montage électrique des jauges;
– la fig. 4 est une vue en coupe de côté d'une balance selon l'invention;
– la fig. 5 est une vue en coupe de face de la balance de la fig. 4.

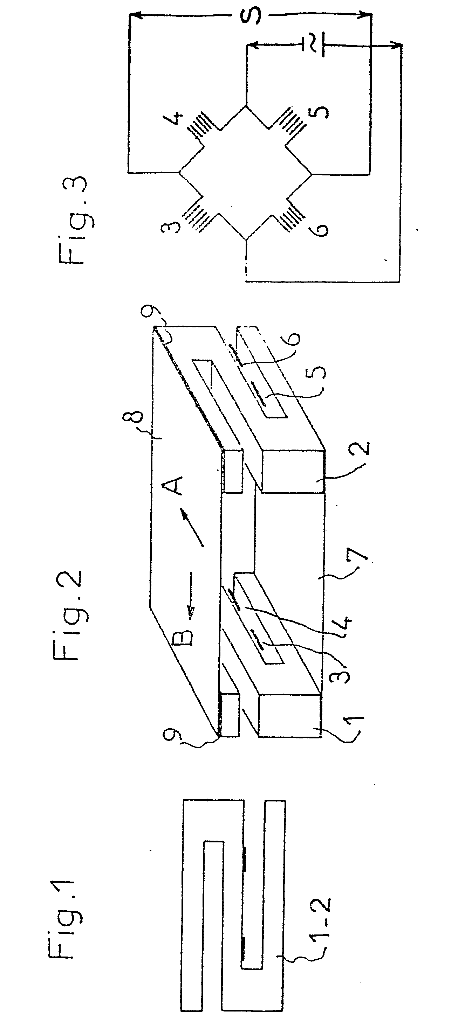

Sur les figs 1 et 2, on voit que la balance est constituée par deux capteurs en S 1 et 2 munis chacun de deux jauges de contrainte 3, 4 respectivement 5, 6. Les deux capteurs sont montés parallèlement sur une embase 7 sur laquelle ils sont fixés et supportent un plateau supérieur 8 par l'intermédiaire d'un joint élastique 9.

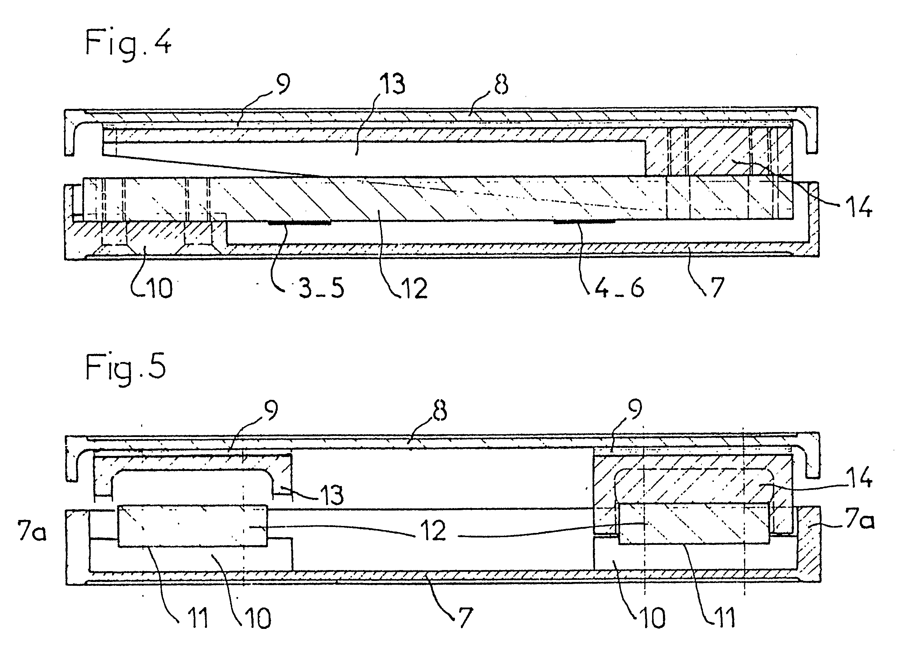

Selon une forme d'exécution préférentielle d'une balance selon l'invention, illustrée par les figs 4 et 5, on constate que les capteurs en S 1 et 2 comprennent chacun trois parties:
– Une branche inférieure constituée par l'embase 7 comportant deux bossages 10 respectivement découpés par une saignée 11. Comme le montre la fig. 5, ces bossages sont réservés à proximité de deux des parois latérales opposées 7a de l'embase.
– Une branche médiane, ou élément sensible du capteur, constituée par un barreau parallélépipédique 12 dont la face inférieure longitudinale est équipée de deux jauges de contrainte 3, 5 et 4, 6. L'une des extrémités de chaque barreau 12 est vissée avec le bossage 10 dans la saignée 11.

Cette fixation rend les deux éléments sensibles 12 des capteurs 1 et 2 solidaires de l'embase 7.

– Une branche supérieure constituée par un support en U 13 comportant un bossage 14 auquel est vissée l'autre extrémité libre du barreau 12.

Les deux capteurs 1 et 2 sont ainsi disposés parallèlement et supportent un plateau 8 par l'intermédiaire de deux bandes en matière élastique 9 collées sur leurs branches supérieures 13.

La forme en S des capteurs 1 et 2 assure la stabilité de la lecture lorsque la charge se déplace sur le plateau 8 dans le sens de la flèche A (fig. 2). Le montage électrique des jauges (fig. 3) fait la somme S des mesures des capteurs 1 et 2 assurant ainsi la stabilité de la lecture lorsque la charge se déplace sur le plateau dans le sens de la flèche B (fig. 2).

L'assemblage élastique des capteurs 1 et 2 et du plateau supérieur 8, procuré par les joints élastiques 9, compense la déformation de l'un ou l'autre des capteurs lorsque les efforts ne sont pas régulièrement répartis.

Le plateau 8 et l'embase 7 peuvent être réalisés en alliage métallique ou en matière plastique et ne réclament aucune précision de fabrication, par conséquent ils peuvent être utilisés bruts de moulage.

Seuls les barreaux 12, constituant les éléments sensibles des capteurs, exigent des précisions dimensionnelles pour obtenir un équilibre rigoureux entre les capteurs.

Les composants électroniques, non représentés, qui transmettent et traduisent les mesures des jauges de contrainte 3, 4 et 5, 6, sont disposés entre les deux capteurs 1, 2 dans l'embase 7.

Les moyens d'affichage sont fixés, par exemple, sous le plateau 8 au droit d'une fenêtre pratiquée dans ledit plateau.

**Revendications**

1. Balance, notamment pèse-personne, comprenant deux éléments sensibles (1, 2) parallèles, formant capteurs de force supportant chacun deux jauges de contrainte (3, 4, 5, 6) et intercalés entre une embase (7) dont ils sont solidaires et un plateau supérieur (8) destiné à recevoir les corps à peser, un moyen pour convertir le mouvement vers le bas du plateau (8) en un signal électrique, un moyen électronique pour traduire ce signal et un moyen d'affichage pour lire ce signal, caractérisée par le fait que les éléments sensibles (1, 2) comportent chacun un barreau horizontal solidaire de l'embase (7) par une de ses extrémités et portant le plateau mobile (8) par son autre extrémité, par l'intermédiaire d'un joint élastique (9), les barreaux formant chacun la branche centrale d'un S et les branches centrales des deux S étant orientées dans le même sens.

2. Balance suivant la revendication 1, caractérisée par le fait que la branche (12) de chaque élément sensible (1, 2) est constituée par un barreau parallélépipédique fixé par une extrémité sur un talon (10) que forme l'embase (7).

3. Balance suivant l'une des revendications 1 et 2, caractérisée par le fait que la face inférieure de la branche (12) de chaque élément sensible est équipée de jauges de contrainte (3, 4, 5, 6).

4. Balance suivant l'une des revendications 1 à 3, caractérisée par le fait que la branche supérieure (13) de chaque élément sensible (1, 2) est constituée par un support en U dont l'une des extrémités est rendue solidaire de l'extrémité libre de la branche (12) dudit élément sensible.

5. Balance suivant la revendication 4, caractérisée par le fait que l'une des extrémités de la branche supérieure (13) en U forme un talon (14) de fixation à l'extrémité libre de la branche (12) que les deux ailes de la branche (13) chevauchent partiellement.

**Claims**

1. A balance, especially for weighing persons, comprising two parallel sensitive elements (1, 2), forming force detectors supporting each two strain gauges (3, 4, 5, 6) and interposed between a base (7) to which they are rigidly connected and an upper plate (8) for receiving the bodies to weigh, a means for converting the downward movement of plate (8) into an electric signal, an electronical means for processing said signal and display means for reading said signal, wherein the sensitive elements (1, 2) comprise each a horizontal bar rigidly connected to the base (7) by one of its ends and carrying the mobile plate (8) on its other end, through a resilient seal (9), the bars forming each the central branch of an S member and the central branches of the two S members being oriented in the same direction.

2. A balance according to claim 1, wherein the branch (12) of each sensitive element (1, 2) is formed of a parallelepipedal bar fixed by one end to a projection (10) formed on base (7).

3. A balance according to one of claims 1 and 2, wherein the lower face of branch (12) of each sensitive element is provided with strain gauges (3, 4, 5, 6).

4. A balance according to one of claims 1 to 3, wherein the upper branch (13) of each sensitive element (1, 2) is made of a U-shaped support, one end of which is rigidly connected to the free end of branch (12) of said sensitive element.

5. A balance according to claim 4, wherein there is formed on one of the ends of the U-shaped upper branch (13) a projection (14) for the fixation of the free end of branch (12) which is partially overlapped by the two wings of branch (13).

**Patentansprüche**

1. Waage, insbesondere Personenwaage, mit zwei parallelen Fühlelementen (1, 2), die Messwertgeber bilden und jeweils zwei Dehnungsmessfühler (3, 4, 5, 6) tragen und die zwischen einer Basisplatte (7), mit der sie kraftschlüssig verbunden sind, und einer zur Aufnahme des zu wiegenden Körpers bestimmten oberen Platte (8) eingesetzt sind, einer Einrichtung zur Umwandlung der Abwärtsbewegung der Platte (8) in ein elektrisches Signal, einer elektronischen Einrichtung zum Umsetzen dieses Signals und einer Anzeigeeinrichtung zum Ablesen dieses Signals, dadurch gekennzeichnet, dass die Fühlelemente (1, 2) jeweils einen horizontalen Stab enthalten, der mit der Basisplatte (7) über eines seiner Enden kraftschlüssig verbunden ist und mit seinem anderen Ende mittels einer elastischen Verbindung (9) die bewegliche Platte (8) trägt, wobei jeder der Stäbe den mittleren Schenkel eines S bildet und die mittleren Schenkel der beiden S gleichsinnig orientiert sind.

2. Waage nach Anspruch 1, dadurch gekennzeichnet, dass der Schenkel (12) jedes Fühlelementes (1, 2) von einem parallel-epipedischen Stab gebildet ist, der mit einem Ende an einem von der Basisplatte (7) gebildeten Absatz (10) befestigt ist.

3. Waage nach Anspruch 1 oder 2, dadurch gekennzeichnet, dass die untere Fläche des Schenkels (12) jedes Fühlelementes mit Dehnungsmessfühlern (3, 4, 5, 6) ausgestattet ist.

4. Waage nach einem der Ansprüche 1 bis 3, dadurch gekennzeichnet, dass der obere Schenkel (13) jedes Fühlelementes (1, 2) von einem U-Träger gebildet ist, dessen eines Ende mit dem freien Ende des Schenkels (12) des genannten Fühlelementes kraftschlüssig verbunden ist.

5. Waage nach Anspruch 4, dadurch gekennzeichnet, dass das eine der Enden des oberen U-förmigen Schenkels (13) einen Absatz (14) zur Befestigung des freien Endes des Schenkels (12) bildet, das von den beiden Flanschen des Schenkels (13) teilweise übergriffen wird.

Fig.1

Fig.2

Fig.3

Fig. 4

Fig. 5